(19)

Europäisches
Patentamt
European
Patent Office
Office européen
des brevets

(11) **EP 3 889 849 A1**

(12) **EUROPEAN PATENT APPLICATION**

(43) Date of publication:
**06.10.2021  Bulletin 2021/40**

(21) Application number: **21156391.1**

(22) Date of filing: **10.02.2021**

(51) Int Cl.:
***G06N 20/00*** (2019.01)          ***G06F 17/16*** (2006.01)
***G06F 40/216*** (2020.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **31.03.2020   IN 202021014308**

(71) Applicant: **Tata Consultancy Services Limited
Maharashtra (IN)**

(72) Inventors:
• **VEMPADA, Ramu Reddy
  560066 Bangalore, Karnataka (IN)**
• **RUDRARADHY, Rakesh Hoovinahalli
  560066 Bangalore, Karnataka, (IN)**
• **GOLI, Anilkumar
  560066 Bangalore, Karnataka (IN)**
• **KARADAGI, Sanjeev Narayan
  560066 Bangalore, Karnataka (IN)**
• **KUMAR, Shubham
  560066 Bangalore, Karnataka (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR SPECIFIC ACTIONABLE DETERMINATION IN AN APPLICATION**

(57)    This disclosure relates generally to a method and a system a method and a system for a specific actionable determination in an application is provided. The disclosure determines specific actions using supervised or unsupervised techniques or hybrid techniques based on Singular value decomposition (SVD) and Term Frequency-Inverse Document Frequency (TF-IDF) that utilizes a combination of individual feature sets and a combined feature sets to increase the relevancy of the resolution recommendation. Further the proposed specific actionable determination system is also enabled with continual learning feature to facilitate learning and adaption as new data comes in based a dynamic confidence score computed using cosine similarity techniques.

FIG. 1

EP 3 889 849 A1

**Description**

CROSS-REFERENCE TO RELATED APPLICATIONS AND PRIORITY

The present application claims priority from Indian provisional application no. 202021014308, filed on March 31, 2020.

TECHNICAL FIELD

The disclosure herein generally relates to field of a specific actionable determination in an application and, more particularly, to field for a specific actionable determination in an application along with a continual learning ability.

BACKGROUND

The digitized/automated environments for today's competitive business enterprise is complex, multi-tier operating environments that requires efficient- cost effective service support. These environments that are mostly digital/automated in nature include system management, task management and routine maintenance procedures such as problem detection, determination and resolution for the service infrastructure. These systems monitor a set of pre-defined events continuously and generates incidents when alerts are triggered. Further a set of recommendations or specific actions are also suggested for resolution of the triggered alerts.

The systems that determine specific actions for issues/alerts has been an area of exhaustive research especially with the evolution of e-commerce applications. Most of the existing techniques for recommendation are built on a set of predictive rules which are automatically generated by a rule-based learning algorithm with coverage, confidence and rule complexity criteria.

Further few existing techniques for determining specific actions for issues/alerts is based on earlier behavior of the user or similar users for a particular issue/event, wherein vast amount of historical information is be converted into practical knowledge and used for recommendation as repeating events are most likely resolved by inferring from similar historical tickets. Nevertheless, most of the existing specific actionable determination systems for issues/alerts may not be very efficient with respect to relevancy of the recommendations suggested for a specific issue. Also, few other challenges faced by existing specific actionable determination systems is that the models created are not precise enough to fulfil the exhaustive information needs of users especially when new challenges/issues arise, as they may not be equipped with a continual learning feature.

SUMMARY

Embodiments of the present disclosure present technological improvements as solutions to one or more of the above-mentioned technical problems recognized by the inventors in conventional systems. For example, in one embodiment, a method and a system for a specific actionable determination in an application is provided. The disclosure determines specific actions using supervised or unsupervised techniques or hybrid techniques based on Singular value decomposition (SVD) and Term Frequency-Inverse Document Frequency (TF-IDF) that utilizes a combination of individual feature sets and a combined feature sets to increase the relevancy of the resolution recommendation. Further the proposed specific actionable determination system is also enabled with continual learning feature to facilitate learning and adaption as new data comes in based a dynamic confidence score computed using cosine similarity techniques.

In another aspect, a method and a system for a specific actionable determination in an application is provided. The method includes receiving a plurality of tracker units as inputs from an application, wherein the plurality of tracker units are structured or unstructured, labelled or unlabeled and comprises of several sets of attributes that include a set of categorical attributes and a set of textual attributes and a set of numerical attributes. The method further includes extracting a first set of tracking unit attributes from the plurality of tracker units, wherein the first set of tracking unit attributes for structured tracker units includes a set of key:value pair wise attributes and the first set of attributes for unstructured tracker units includes a set of textual attributes. The method further includes pre-processing the extracted first set of tracking attributes, wherein the pre-processing techniques for structured tracker units further include removal of a key : value pair that is null and punctuation removal. The method further includes converting the pre-processed first set of tracking attributes to a pre-defined standard format to obtain the second set of tracking attributes, wherein the categorical first set of tracking attributes and the textual first set of tracking attributes are converted to a numerical features format. The method further includes extracting a set of relevant tracking features from the second set of tracking attributes based on Singular value decomposition (SVD) with Term Frequency-Inverse Document Frequency (TF-IDF) techniques, wherein the set of relevant features comprise of a plurality of individual tracking feature sets and a plurality of combined tracking feature sets. The method further includes constructing a specific actionable determination model for determining a specific actionable determination using the set of relevant tracking features based on supervised or unsupervised techniques or hybrid techniques, wherein supervised techniques are implemented for labelled tracker units, unsupervised techniques are implemented for unlabeled tracker units and hybrid techniques are implemented based on a pre-defined threshold, wherein the specific actionable determination model is a dynamic model that is continually learns based on a feedback loop using a dynamic confidence score.

In another aspect, a system for a method and a system for a specific actionable determination in an application is provided. The system includes an input module that further comprises of a tracking unit input module configured for receiving a plurality of tracker units as inputs from an application and a testing unit input module configured for receiving a plurality of testing units as inputs from an application. The system further includes a basic extractor that further comprises of a tracking unit basic extractor configured for extracting a first set of attributes from the plurality of tracker units and a testing unit basic extractor configured for extracting a first set of testing attributes from the plurality of testing units. The system further includes a pre-processor that further comprises of a tracking pre-processor configured for pre-processing the extracted first set of tracking attributes and a testing pre-processor configured for pre-processing the extracted first set of testing attributes. The system further includes a second extractor that further comprises of a tracking second extractor configured for converting the pre-processed first set of tracking attributes to a pre-defined standard format to obtain the second set of tracking attributes and a testing second extractor configured for converting the pre-processed first set of testing attributes to a pre-defined standard format to obtain the second set of testing attributes. The system further includes a relevant feature extractor that further comprises of a tracking relevant feature extractor configured for extracting a set of relevant tracking features from the second set of tracking attributes and a testing relevant feature extractor configured for extracting a set of relevant testing features from the second set of testing attributes. The system further includes a specific actionable determination model for determining a specific actionable determination using the set of relevant tracking features based on supervised or unsupervised techniques or hybrid techniques, wherein the specific actionable determination model is a dynamic model that is enabled with a continually learning features using a continual learning module based on a feedback loop using a dynamic confidence score. The system further includes a specific actionable determination module configured for a determining a specific actionable determination from the specific actionable determination model based on a comparison of the set of relevant tracking features and set of relevant testing features. The system further includes a display module wherein the specific actionable determination is displayed.

In yet another aspect, a non-transitory computer readable medium for a specific actionable determination in an application is provided. The program includes receiving a plurality of tracker units as inputs from an application, wherein the plurality of tracker units are structured or unstructured, labelled or unlabeled and comprises of several sets of attributes that include a set of categorical attributes and a set of textual attributes and a set of numerical attributes. The program further includes extracting a first set of tracking unit attributes from the plurality of tracker units, wherein the first set of tracking unit attributes for structured tracker units includes a set of key:value pair wise attributes and the first set of attributes for unstructured tracker units includes a set of textual attributes. The program further includes pre-processing the extracted first set of tracking attributes, wherein the pre-processing techniques for structured tracker units further include removal of a key : value pair that is null and punctuation removal. The program further includes converting the pre-processed first set of tracking attributes to a pre-defined standard format to obtain the second set of tracking attributes, wherein the categorical first set of tracking attributes and the textual first set of tracking attributes are converted to a numerical features format. The program further includes extracting a set of relevant tracking features from the second set of tracking attributes based on Singular value decomposition (SVD) with Term Frequency-Inverse Document Frequency (TF-IDF) techniques, wherein the set of relevant features comprise of a plurality of individual tracking feature sets and a plurality of combined tracking feature sets. The program further includes constructing a specific actionable determination model for determining a specific actionable determination using the set of relevant tracking features based on supervised or unsupervised techniques or hybrid techniques, wherein supervised techniques are implemented for labelled tracker units, unsupervised techniques are implemented for unlabeled tracker units and hybrid techniques are implemented based on a pre-defined threshold, wherein the specific actionable determination model is a dynamic model that is continually learns based on a feedback loop using a dynamic confidence score.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles;

FIG.1 illustrates an exemplary block diagram of a system for a method for a specific actionable determination in an application in accordance with some embodiments of the present disclosure;

FIG.2 is a functional block diagram of various modules stored in module(s) of a memory of the system of FIG.1 in accordance with some embodiments of the present disclosure;

FIG.3 illustrates an example of a structured tracker units and the structured testing units, in accordance with some embodiments of the present disclosure;

FIG.4 is an exemplary flow diagram for a method of continually learning in the specific actionable determination model of the specific actionable determination in an application, in accordance with some embodiments of the present disclosure;

FIG.5A and FIG.5B is an exemplary flow diagram for a method of specific actionable determination using a specific actionable determination model and a specific actionable determination module, in accordance with some embodiments of the present disclosure; and

FIG.6A and FIG.6B is an exemplary flow diagram for a specific actionable determination in an application according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

The disclosure proposes a method and a system for a specific actionable determination in an application is provided. The disclosure determines specific actions using supervised or unsupervised techniques or hybrid techniques based on Singular value decomposition (SVD) and Term Frequency-Inverse Document Frequency (TF-IDF) that utilizes a combination of individual feature sets and a combined feature sets to increase the relevancy of the resolution recommendation. Further the proposed specific actionable determination system is also enabled with continual learning feature to facilitate learning and adaption as new data comes in based a dynamic confidence score computed using cosine similarity techniques.

An example scenario where the proposed a method and a system for a specific actionable determination in an application can be implemented is provided in this section. In IT service environments, the problem incident is logged in the form of a ticket which contains the problem description and different metadata like status, severity, priority etc. The system support team members provide the resolution description when such tickets are resolved. The repeating events are most likely resolved by inferring from similar historical tickets. Hence the proposed method and system can be used in such ticketing system to recommend resolutions based on the historic data analysis. The proposed specific actionable determination system is also enabled with continual learning feature to facilitate learning and adaption as new data comes in based a dynamic confidence score computed using cosine similarity techniques, which can be used to learn more resolutions for more relevant recommendations.

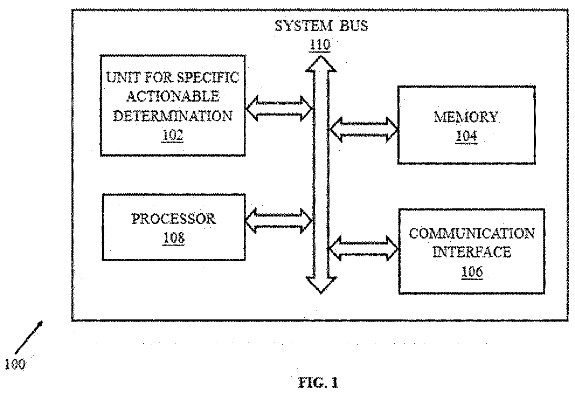

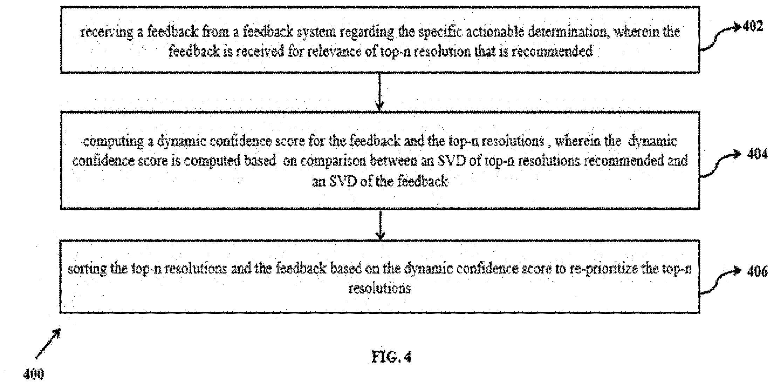

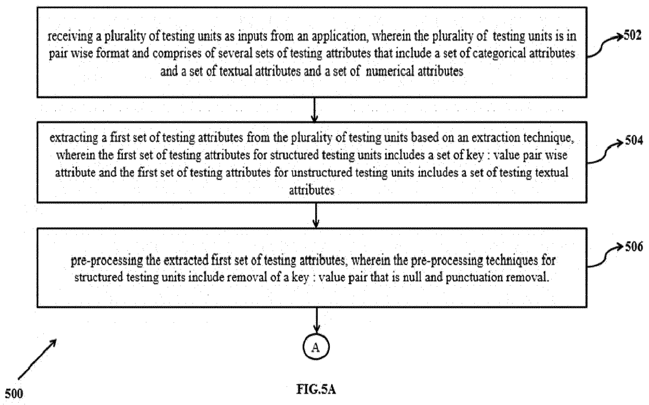

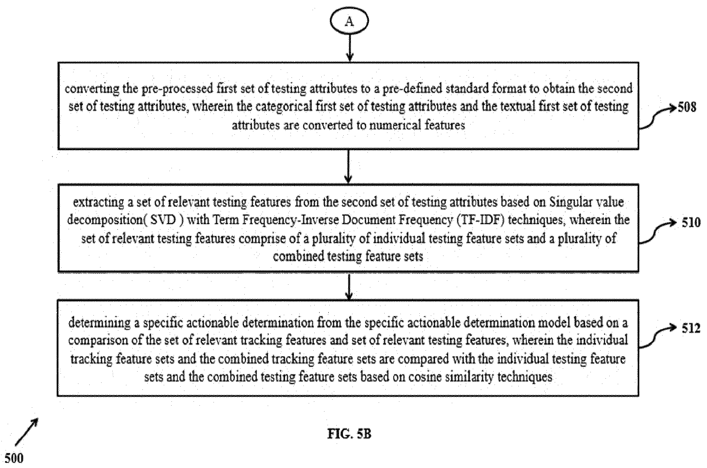

Referring now to the drawings, and more particularly to FIG.1 through FIG.6B, where similar reference characters denote corresponding features consistently throughout the figures, there are shown preferred embodiments and these embodiments are described in the context of the following exemplary system and/or method.

FIG. 1 is a block diagram of a system (100) for a specific actionable determination in an application, in accordance with an example embodiment. The system (100) includes a unit for a specific actionable determination (102). The adaptive filter based learning model (102) includes or is otherwise in communication with a memory (104), a communication interface (106), and a processor (108). The memory (104), communication interface (106), and the processor (108) may be coupled by a system bus (110) or a similar mechanism. Although FIG. 1 shows example components of adaptive filter based learning model (102), in other implementations, system (100) may contain fewer components, additional components, different components, or differently arranged components than depicted in FIG. 1.

The processor(108) may be implemented as one or more microprocessors, microcomputers, microcontrollers, digital signal processors, central processing units, state machines, logic circuitries, and/or any devices that facilitates in designing polymeric carrier for controlled release of molecules. Further, the processor (108) may comprise a multi-core architecture. Among other capabilities, the processor (108) is configured to fetch and execute computer-readable instructions or modules stored in the memory (104). The processor (108) may include circuitry implementing, among others, audio and logic functions associated with the communication. For example, the processor (108) may include, but are not limited to, one or more digital signal processors (DSPs), one or more microprocessor, one or more special-purpose computer chips, one or more field-programmable gate arrays (FPGAs), one or more application-specific integrated circuits (ASICs), one or more computer(s), various analog to digital converters, digital to analog converters, and/or other support circuits. The processor (108) thus may also include the functionality to encode messages and/or data or information. The processor (108) may include, among other things, a clock, an arithmetic logic unit (ALU) and logic gates configured to support operation of the processor (108). Further, the processor (108) may include functionality to execute one or more software programs, which may be stored in the memory (104) or otherwise accessible to the processor (108).

The memory (104), may store any number of pieces of information, and data, used by the system (100) to implement the functions of the system (100). The memory (104) may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. Examples of volatile memory may include but are not limited to volatile random access memory (RAM). The non-volatile memory may additionally or alternatively comprise an electrically erasable programmable read only memory (EEPROM), flash memory, hard drive, or the like. The memory 104 may be configured to store information, data, applications, instructions or the like for enabling the system (100) to carry out various functions in accordance with various example embodiments. Additionally, or alternatively, the memory (104) may be configured to store instructions which when executed by the processor (108) causes the system (100) to behave in a manner as described in various embodiments.

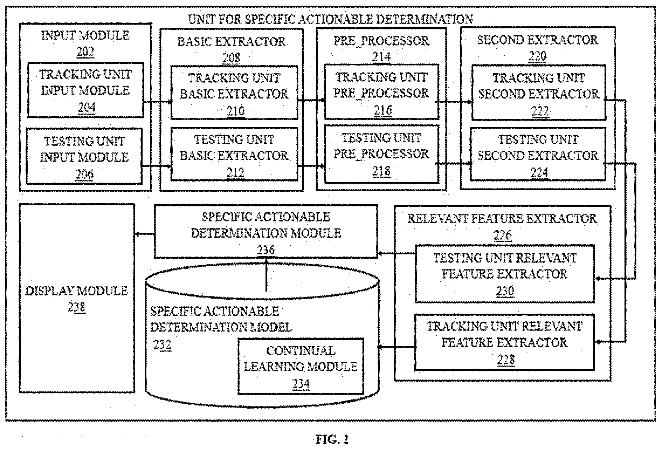

The communication interface(s) (106) can facilitate multiple communications within a wide variety of networks and protocol types, including wired networks, for example, local area network (LAN), cable, etc., and wireless networks, such as Wireless LAN (WLAN), cellular, or satellite. For the purpose, the communication interface (s) (106) may include one or more ports. One or more functionalities of the system (100) and components thereof, is further explained in detail with respect to block diagram described in FIG.2.

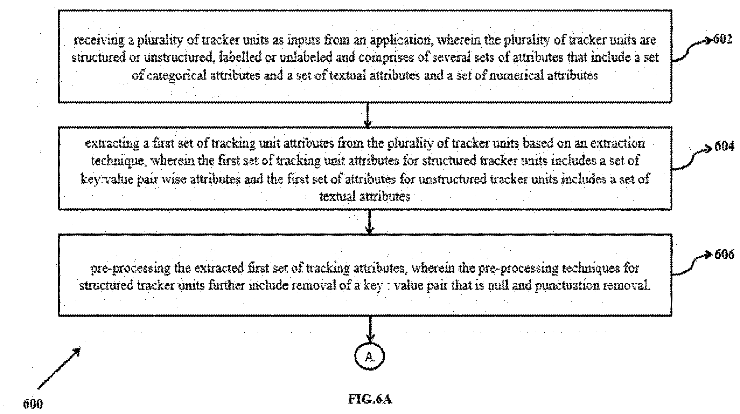

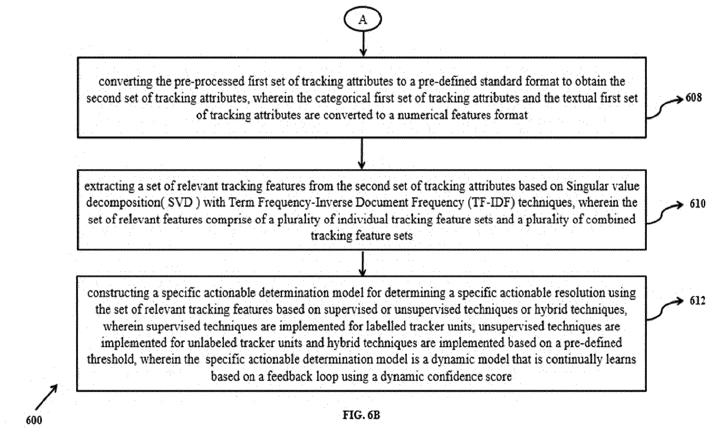

Functions of the components of the system (100) are explained in conjunction with functional modules of the system (100) stored in the memory (104) and further explained in conjunction with flow diagram of FIGS.6A and FIG.6B.

FIG.2, with reference to FIG.1, is a block diagram of various modules for a specific actionable determination in an application of the system 100 of FIG. 1 in accordance with an embodiment of the present disclosure.

In an embodiment of the present disclosure, the FIG.2 illustrates a system (100) for a specific actionable determination in an application that includes an input module(202) that further comprises of a tracking unit input module (204) configured for receiving a plurality of tracker units as inputs from an application and a testing unit input module (206) configured for receiving a plurality of testing units as inputs from an application. The system (100) further includes a basic extractor (208) that further comprises of a tracking unit basic extractor (210) configured for extracting a first set of attributes from the plurality of tracker units and a testing unit basic extractor (212) configured for extracting a first set of testing attributes from the plurality of testing units. The system (100) further includes a pre-processor (214) that further comprises of a tracking pre-processor (216) configured for pre-processing the extracted first set of tracking attributes and a testing pre-processor (218) configured for pre-processing the extracted first set of testing attributes. The system (100) further includes a second extractor (220) that further comprises of a tracking second extractor (222) configured for converting the pre-processed first set of tracking attributes to a pre-defined standard format to obtain the second set of tracking attributes and a testing second extractor (224) configured for converting the pre-processed first set of testing attributes to a pre-defined standard format to obtain the second set of testing attributes. The system (100) further includes a relevant feature extractor (226) that further comprises of a tracking relevant feature extractor (128) configured for extracting a set of relevant tracking features from the second set of tracking attributes and a testing relevant feature extractor (230) configured for extracting a set of relevant testing features from the second set of testing attributes. The system (100) further includes a specific actionable determination model (232) for determining a specific actionable determination using the set of relevant tracking features based on supervised or unsupervised techniques or hybrid techniques, wherein the specific actionable determination model is a dynamic model that is enabled with a continually learning features using a continual learning module (234) based on a feedback loop using a dynamic confidence score. The system (100) further includes a specific actionable determination module (236) configured for a determining a specific actionable determination from the specific actionable determination model (232) based on a comparison of the set of relevant tracking features and set of relevant testing features. The system (100) further includes a display module(238) wherein the specific actionable determination is displayed. The various modules of the system for a specific actionable determination in an application are implemented as at least one of a logically self-contained part of a software program, a self-contained hardware component, and/or, a self-contained hardware component with a logically self-contained part of a software program embedded into each of the hardware component that when executed perform the above method described herein.

According to an embodiment of the disclosure, system (100) for a specific actionable determination in an application includes the input module(202) that further comprises of the tracking unit input module (204) configured for receiving a plurality of tracker units as inputs from an application and the testing unit input module (206) configured for receiving a plurality of testing units as inputs from an application.

In an embodiment, the structured tracker units and the structured testing units comprise of a plurality of note:note value attribute that represent an event or a issue and a corresponding remark:remark value attribute that represents the resolution for the event or the issue.

In an embodiment, system (100) for a specific actionable determination in an application is configured for receiving inputs/ textual attributes from several languages wherein disclosed specific actionable determination method is language independent for determining a specific actionable. In an example scenario, the specific actionable determination can be implemented on English, German languages.

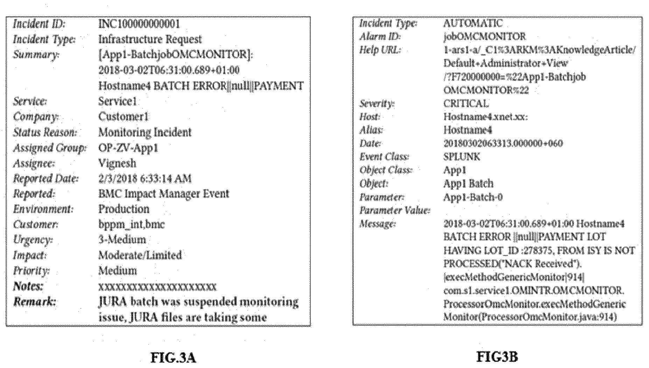

A use case example of a structured tracker units and the structured testing units is illustrated in FIG.3A and FIG.3B, wherein the attributes are present as Key: Key Value pairs. The structured tracker units in FIG.3A consists of 12 attributes are present in the form of (Key:Value) pairs after discarding the attribute 'Parameter Value', as it has null value. Among these, eight attributes are to categorical attributes namely 'Alias', 'Event Class', 'Host', 'Incident Type', 'Object', 'Object Class', 'Parameter' and 'Severity' where as three attributes are text fields such as 'Alarm ID', 'Help URL' and 'Message' and finally there is one numerical attribute that is 'Date'. As 'Date' is only single numerical field.

According to an embodiment of the disclosure, the system (100) for a specific actionable determination in an application further includes the basic extractor (208) that further comprises of the tracking unit basic extractor (210) configured for extracting a first set of attributes from the plurality of tracker units and the testing unit basic extractor (212) configured for extracting a first set of testing attributes from the plurality of testing units.

In an embodiment, the first set of attributes are extracted from the plurality of tracker units and the testing units based on a specific attribute. Considering an use case example of a structured tracker units and the structured testing units is illustrated in FIG.3A, wherein the first set of attributes from the raw text in FIG.2A based on the "remark" attribute.

According to an embodiment of the disclosure, the system (100) for a specific actionable determination in an application further includes the pre-processor (214) that further comprises of a tracking pre-processor (216) configured for pre-processing the extracted first set of tracking attributes and the testing pre-processor (218) configured for pre-processing the extracted first set of testing attributes.

In an embodiment, the pre-processing techniques include tokenization, lower case of words, stop words removal and lemmatization. An use case example of a scenario for pre-processing raw text is shown below;

Raw Text:

BATCH Exception occurred, Invalid content was found starting with element "Gateways". No child element is expected at this point.-Error at line 1 column 4084' ‖Possible reason for this failure could be, (a) Incorrect message. Validate the messge against specification (b) Program exception. Verify SystemErr.log for further details. Contact System Administrator for assistance"

Pre-processed text:

batch except occur invalid content found start element gateway child element expect point error line 1 column 4084 possible reason failure could in correct message valid message specification b program except verifiy systemer log detail contact system administrator assist

In an embodiment, considering an example of FIG.3A and FIG.3B, wherein 12 attributes are present in the form of (Key:Value) pairs after discarding the attribute 'Parameter Value', as it has null value.

According to an embodiment of the disclosure, the system (100) for a specific actionable determination in an application further includes the second extractor (220) that further comprises of the tracking second extractor (222) configured for converting the pre-processed first set of tracking attributes to a pre-defined standard format to obtain the second set of tracking attributes and the testing second extractor (224) configured for converting the pre-processed first set of testing attributes to a pre-defined standard format to obtain the second set of testing attributes.

In an embodiment, the pre-defined standard format to obtain the second set of tracking attributes or the second set of testing attributes is a numerical format using known techniques that include hot encoding techniques for the categorical attributes and TF-IDF -SVD based techniques for the textual attributes and the numerical attributes.

According to an embodiment of the disclosure, the system (100) for a specific actionable determination in an application further includes the relevant feature extractor (226) that further comprises of the tracking relevant feature extractor (228) configured for extracting a set of relevant tracking features from the second set of tracking attributes and the testing relevant feature extractor (230) configured for extracting a set of relevant testing features from the second set of testing attributes. The relevant features are extracted based on Singular value decomposition (SVD) with Term Frequency-Inverse Document Frequency (TF-IDF) techniques.

In an embodiment, considering an example of FIG.3A and FIG.3B, wherein 12 attributes are present in the form of (Key:Value) pairs after discarding the attribute 'Parameter Value', as it has null value. Among these, eight attributes are to categorical attributes namely 'Alias', 'Event Class', 'Host', 'Incident Type', 'Object', 'Object Class', 'Parameter' and 'Severity' where as three attributes are text fields such as 'Alarm ID', 'Help URL' and 'Message' and finally there is one numerical attribute that is 'Date'. As 'Date' is only single numerical field. The relevant features are extracted from the above attributes based on based on Singular value decomposition (SVD) with Term Frequency-Inverse Document Frequency (TF-IDF) techniques. The SVD-TF-IDF techniques extract the set of relevant testing features or the set of relevant tracking features based on dynamically determined parameters that include a normalized Term Frequency (TF) and an Inverse Document Frequency (IDF).

In an embodiment, the Term Frequency (TF), measures how frequently a term occurs in a document, since every document is different in length, it is possible that a term would appear much more times in long documents than shorter ones. Thus, the term frequency is often divided by the document length (aka. the total number of terms in the document) as a way of normalization and expressed as follows:

$$TF(t) = (Number\ of\ times\ term\ t\ appears\ in\ a\ document)$$
$$/\ (Total\ number\ of\ terms\ in\ the\ document).$$

In an embodiment, the Inverse Document Frequency (IDF), measures how important a term is while computing TF, all terms are considered equally important. However certain terms, such as "is", "of", and "that", may appear a lot of times but have little importance. Thus there is a need to weigh down the frequent terms while scale up the rare ones, by computing the following:

$$IDF(t) = log\_e(Total\ number\ of\ documents$$
$$/\ Number\ of\ documents\ with\ term\ t\ in\ it).$$

According to an embodiment of the disclosure, the system (100) for a specific actionable determination in an application further includes the specific actionable determination model (232) for determining a specific actionable determination using the set of relevant tracking features based on supervised or unsupervised techniques or hybrid techniques, wherein the specific actionable determination model is a dynamic model that is enabled with a continually learning features using a continual learning module (234) based on a feedback loop using a dynamic confidence score.

In an embodiment, supervised techniques are implemented for labelled tracker units, unsupervised techniques are implemented for unlabeled tracker units and hybrid techniques are implemented based on a pre-defined threshold, wherein the pre-defined threshold is determined based on size of the input raw data. The supervised techniques include K-nearest neighbors, random forest and neural network, unsupervised techniques include clustering techniques and the hybrid techniques include K-nearest neighbors with K-means.

In an embodiment, the specific actionable determination model (232) is constructed based on KNN classification, the output is a class membership. An object is classified by a plurality vote of its neighbors, with the object being assigned to the class most common among its k nearest neighbors (k is a positive integer, typically small). If k = 1, then the object is simply assigned to the class of that single nearest neighbor. In this study, we have chosen k=3 to pick closest 3 Notes from the training samples to the corresponding input test Notes. The corresponding specific action determination or resolutions of the closest 3 Notes are then determined/recommended. The specific action determination/recommendations are enriched using clustering and frequency weights to provide better decision support.

In one embodiment, the step of continually learning by the specific actionable determination model (232) using a continual learning module (234) includes the following steps;

At step (402), the method (400) includes receiving a feedback from a feedback system regarding the specific actionable determination, wherein the feedback is received for relevance of top-n resolution that is recommended.

In an embodiment, the feedback system could be a user feels that the specific actionable determination or recommended resolutions are not relevant or may need more details.

At step (404), the method (400) includes computing a dynamic confidence score for the feedback and the top-n resolutions , wherein the dynamic confidence score is computed based on comparison between a SVD of top-n resolutions recommended and a SVD of the feedback and the top-n resolutions recommended, wherein on comparison of cosine similarities between a SVD of top-n resolutions recommended with test example and cosine similarities between a SVD of the feedback and the test example". The dynamic confidence score can be expressed as follows;

$$Cosine\ similarity\ (top-n\ resolutions\ recommended, test)$$
$$= Dot\ product(top$$
$$- n\ resolutions\ recommended, test)\ /\ \|\ top$$
$$- n\ resolutions\ recommended\ \|\ *\ \|\ test\ \|$$

And

$$\text{Cosine Similarity}(feedback, test)$$
$$= \text{Dot product}(feedback, test) / \|feedback\| * \|test\|$$

At step (406), the method (400) includes sorting the top-n resolutions and the feedback based on the dynamic confidence score to re-prioritize the top-n resolutions.

In an embodiment, specific actionable determination and the dynamic confidence score to re-prioritize the top-n resolutions can be determined based on atleast one of the several parameters that include " problem description" or "resolution".

In an embodiment, considering an example to illustrate continual learning , wherein the top-n resolution is as follows;

Top1 : Incident A -99%- February

Top2 : Incident B -98%- April

Top3 : Incident C -98% - February

A feedback system provides with another Incident Y (in July) where the problem description is similar to that of Incident X. The continual learning ability (CLA) feature, processes the incidents and provides a revised specific actionable determination as follows

Top1 : Incident X -99.7%- Jun

Top2 : Incident A -99%- Feb

Top3 : Incident B -98%- April

According to an embodiment of the disclosure, the system (100) for a specific actionable determination in an application further includes the specific actionable determination module (236) configured for a determining a specific actionable determination from the specific actionable determination model (232) based on a comparison of the set of relevant tracking features and set of relevant testing features. The specific actionable determination is a top-n resolution that is recommended based on a pre-defined value of n.

In one embodiment, the step of specific actionable determination in the specific actionable determination module (236) using the specific actionable determination model (232) includes the following steps:

At step (502), the method (500) includes receiving a plurality of testing units as inputs from an application in the testing unit input module (206) in the input module(202). The plurality of testing units is structured or unstructured, labelled or unlabeled and comprises of several sets of attributes that include a set of categorical attributes and a set of textual attributes and a set of numerical attributes.

In an embodiment, the structured testing units and the structured testing units comprise of a plurality of note:note value attribute that represent a event or a issue and a corresponding remark : remark value attribute that represents the resolution for the event or the issue.

At step (504), the method (500) includes extracting a first set of testing attributes from the plurality of testing units based on an extraction technique in the testing unit basic extractor (212) of the basic extractor (208). The first set of testing attributes for structured testing units includes a set of key:value pair wise attribute and the first set of testing attributes for unstructured testing units includes a set of testing textual attributes. In one embodiment, the extraction techniques include known techniques such a delimiter extraction technique, wherein delimiter (:) is used as a separator for Key and Value pairs to check whether the text is Key: Value format or not. However since the Key and Value pairs can exist in several format, the extraction techniques used may vary.

At step (506), the method (500) includes pre-processing the extracted first set of testing attributes, in the testing pre-processor (218) of the pre-processor (214). The pre-processing techniques for structured testing units include removal of a key:value pair that is null and punctuation removal.

In an embodiment, the pre-processing techniques include tokenization, lower case of words, stop words removal and lemmatization.

At step (508), the method (500) includes converting the pre-processed first set of testing attributes to a pre-defined standard format to obtain the second set of testing attributes in the tracking second extractor (224) of the second extractor (220). The categorical first set of testing attributes and the textual first set of testing attributes are converted to numerical features.

At step (510), the method (500) includes extracting a set of relevant testing features from the second set of testing attributes based on Singular value decomposition (SVD) with Term Frequency-Inverse Document Frequency (TF-IDF) techniques in the testing relevant feature extractor (230) of the relevant feature extractor (226).The set of relevant testing features comprise of a plurality of individual testing feature sets and a plurality of combined testing feature sets. The SVD-TF-IDF techniques extract the set of relevant testing features or the set of relevant tracking features based on dynamically determined parameters that include a normalized Term Frequency (TF) and an Inverse Document Frequency (IDF).

In an embodiment, the plurality of individual testing features includes the relevant features of the second sets of categorical testing attributes and the second set of numerical testing attributes sets and further the plurality of combined testing feature sets includes the relevant features of second set of textual testing attributes that are concatenated to form the combined testing feature sets.

At step (512), the method (500) includes determining a specific actionable determination from the specific actionable determination model (232) based on a comparison of the set of relevant tracking features and set of relevant testing features. The individual tracking feature sets and the combined tracking feature sets are compared with the individual testing feature sets and the combined testing feature sets based on cosine similarity techniques.

According to an embodiment of the disclosure, the system (100) for a specific actionable determination in an application further includes the display module(238) wherein the specific actionable determination is displayed

FIG.6A and FIG.6B, with reference to FIG. 1, is an exemplary flow diagram illustrating a method (600) for system (100) for specific actionable determination in an application using the system (100) of FIG. 1 according to an embodiment of the present disclosure. The steps of the method of the present disclosure will now be explained with reference to the components of the system (100) for a specific actionable determination in an application and the modules (202-238) as depicted in FIGS.1, and the flow diagram as depicted in FIG.6A and FIG.6B.

At step 602, the method (600) receiving a plurality of tracker units as inputs from an application in the input module(202) that further comprises of a tracking unit input module (204) configured for receiving a plurality of tracker units as inputs from an application. The plurality of tracker units is structured or unstructured, labelled or unlabeled and comprises of several sets of attributes that include a set of categorical attributes and a set of textual attributes and a set of numerical attributes. In an embodiment, system (100) for a specific actionable determination in an application is configured for receiving inputs/ textual attributes from several languages wherein disclosed specific actionable determination method is language independent for determining a specific actionable. In an example scenario, the specific actionable determination can be implemented on English, German languages.

In the next step at 604, the method (600) includes extracting a first set of tracking unit attributes from the plurality of tracker units based on an extraction technique in the tracking unit basic extractor (210) of the basic extractor (208). The first set of tracking unit attributes for structured tracker units includes a set of key:value pair wise attributes and the first set of attributes for unstructured tracker units includes a set of textual attributes. In one embodiment, the extraction techniques include known techniques such a delimiter extraction technique, wherein delimiter (:) is used as a separator for Key and Value pairs to check whether the text is Key: Value format or not. However since the Key and Value pairs can exist in several format, the extraction techniques used may vary.

In an embodiment, the structured tracker units and structured testing units comprise of a plurality of note: note value attribute that represent a event or a issue and a corresponding remark : remark value attribute that represents the resolution for the event or the issue.

In the next step at 606, the method (600) includes pre-processing the extracted first set of tracking attributes, in the tracking pre-processor (216) of the pre-processor (214). The pre-processing techniques for structured tracker units further include removal of a key:value pair that is null and punctuation removal.

In an embodiment, the pre-processing techniques include tokenization, lower case of words, stop words removal and lemmatization.

In the next step at 608, the method (600) includes converting the pre-processed first set of tracking attributes to a pre-defined standard format to obtain the second set of tracking attributes in tracking second extractor (222) of the second extractor (120). The categorical first set of tracking attributes and the textual first set of tracking attributes are converted to a numerical features format.

In the next step at 610, the method (600) includes extracting a set of relevant tracking features from the second set of tracking attributes based on Singular value decomposition (SVD) with Term Frequency-Inverse Document Frequency (TF-IDF) techniques in the tracking relevant feature extractor (228) of the relevant feature extractor (226). The SVD-TF-IDF techniques extract the set of relevant testing features or the set of relevant tracking features based on dynamically determined parameters that include a normalized Term Frequency (TF) and an Inverse Document Frequency (IDF). The set of relevant features comprise of a plurality of individual tracking feature sets and a plurality of combined tracking feature sets.

In an embodiment, the plurality of the individual tracking features includes the relevant features of the second set of categorical tracking attributes and the second set of numerical tracking attributes. Further the plurality of combined tracking feature sets includes the relevant features of second set of textual tracking attributes that are concatenated to form the combined tracking feature.

In the next step at 612, the method (600) includes constructing a specific actionable determination model(232) for determining a specific actionable determination using the set of relevant tracking features based on supervised or unsupervised techniques or hybrid techniques, wherein supervised techniques are implemented for labelled tracker units, unsupervised techniques are implemented for unlabeled tracker units and hybrid techniques are implemented based on a pre-defined threshold. The specific actionable determination is a top-n resolution that is recommended based on a pre-defined value of n.

The specific actionable determination model(232) is a multi-model, wherein the specific actionable determination model can be a single model or can be multi-models based on input, where multiple models can be created for different applications and different language. In a use case example, a single specific actionable determination model can comprise English and German or a single specific actionable determination model can comprise only English or a specific actionable determination model can comprise German.

In an embodiment, the supervised techniques include K-nearest neighbors, random forest and neural network, unsupervised techniques include clustering techniques and the hybrid techniques include K-nearest neighbors with K-means.

The specific actionable determination model (232) is a dynamic model that is continually learns based on a feedback loop using a continual learning module (234) using a dynamic confidence score. The step of continually learning in the specific actionable determination model at 512, the method (500) includes receiving a feedback from a feedback system regarding the specific actionable determination, wherein the feedback is received by the continual learning module (234) of the specific actionable determination model (232) for relevance of top-n resolution that is recommended from an external feedback system. The continually learning in the specific actionable determination model further includes computing a dynamic confidence score for the feedback and the top-n resolutions, wherein the dynamic confidence score is computed based on comparison between a SVD of top-n resolutions recommended and a SVD of the feedback. The continually learning in the specific actionable determination model further includes sorting the top-n resolutions and the feedback based on the dynamic confidence score to re-prioritize the top-n resolutions.

The step of specific actionable determination at 512, the method (500) includes receiving a plurality of testing units as inputs from an application, wherein the plurality of testing units is in pair wise format and comprises of several sets of testing attributes that include a set of categorical attributes and a set of textual attributes and a set of numerical attributes. The specific actionable determination further includes extracting a first set of testing attributes from the plurality of testing units based on an extraction technique wherein the first set of testing attributes for structured testing units includes a set of key : value pair wise attribute and the first set of testing attributes for unstructured testing units includes a set of testing textual attributes. The specific actionable determination further includes pre-processing the extracted first set of testing attributes, wherein the pre-processing techniques for structured testing units include removal of a key:value pair that is null and punctuation removal. The specific actionable determination further includes converting the pre-processed first set of testing attributes to a pre-defined standard format to obtain the second set of testing attributes, wherein the categorical first set of testing attributes and the textual first set of testing attributes are converted to numerical features. The specific actionable determination further includes extracting a set of relevant testing features from the second set of testing attributes based on Singular value decomposition(SVD) with Term Frequency-Inverse Document Frequency (TF-IDF) techniques, wherein the set of relevant testing features comprise of a plurality of individual testing feature sets and a plurality of combined testing feature sets. The specific actionable determination further includes determining a specific actionable determination from the specific actionable determination model based on a comparison of the set of relevant tracking features and set of relevant testing features, wherein the individual tracking feature sets and the combined tracking feature sets are compared with the individual testing feature sets and the combined testing feature sets based on cosine similarity techniques.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

Hence a method and a system a method and a system for a specific actionable determination in an application is provided. The disclosure determines specific actions using supervised or unsupervised techniques or hybrid techniques based on Singular value decomposition (SVD) with Term Frequency-Inverse Document Frequency (TF-IDF) that utilizes a combination of individual feature sets and a combined feature sets to increase the relevancy of the resolution recommendation. Further the proposed specific actionable determination system is also enabled with continual learning feature to facilitate learning and adaption as new data comes in based a dynamic confidence score computed using cosine similarity techniques.

An example scenario where the proposed a method and a system for a specific actionable determination in an application can be implemented is provided in this section. In IT service environments, the problem incident is logged in the form of a ticket which contains the problem description and different metadata like status, severity, priority etc. The system support team members provide the resolution description when such tickets are resolved. The repeating events are most likely resolved by inferring from similar historical tickets. Hence the proposed method and system can be used in such ticketing system to recommend resolutions based on the historic data analysis. The proposed specific actionable determination system is also enabled with continual learning feature to facilitate learning and adaption as new data comes in based a dynamic confidence score computed using cosine similarity techniques, which can be used to learn more resolutions for more relevant recommendations.

It is to be understood that the scope of the protection is extended to such a program and in addition to a computer-readable means having a message there in; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

**Claims**

1. A processor-implemented method for a specific actionable determination in an application, the method comprising:

   receiving a plurality of tracker units as inputs from an application, wherein the plurality of tracker units are structured or unstructured, labelled or unlabeled and comprises of several sets of attributes that include a set of categorical attributes and a set of textual attributes and a set of numerical attributes(602);

extracting a first set of tracking unit attributes from the plurality of tracker units based on an extraction technique, wherein the first set of tracking unit attributes for structured tracker units includes a set of key:value pair wise attributes and the first set of attributes for unstructured tracker units includes a set of textual attributes; (604);

pre-processing the extracted first set of tracking attributes, wherein the pre-processing techniques for structured tracker units further include removal of a key : value pair that is null and punctuation removal (606);

converting the pre-processed first set of tracking attributes to a pre-defined standard format to obtain the second set of tracking attributes, wherein the categorical first set of tracking attributes and the textual first set of tracking attributes are converted to a numerical features format (608);

extracting a set of relevant tracking features from the second set of tracking attributes based on Singular value decomposition (SVD ) with Term Frequency-Inverse Document Frequency (TF-IDF) techniques, wherein the set of relevant features comprise of a plurality of individual tracking feature sets and a plurality of combined tracking feature sets (610); and

constructing a specific actionable determination model for determining a specific actionable determination using the set of relevant tracking features based on supervised or unsupervised techniques or hybrid techniques, wherein supervised techniques are implemented for labelled tracker units, unsupervised techniques are implemented for unlabeled tracker units and hybrid techniques are implemented based on a pre-defined threshold, wherein the specific actionable determination model is a dynamic model that is continually learns based on a feedback loop using a dynamic confidence score(612).

2. The method according to claim 1, comprising the step of specific actionable determination includes:

receiving a plurality of testing units as inputs from an application, wherein the plurality of testing units are structured or unstructured, labelled or unlabeled and comprises of several sets of attributes that include a set of categorical attributes and a set of textual attributes and a set of numerical attributes (502);

extracting a first set of testing attributes from the plurality of testing units based on an extraction technique, wherein the first set of testing attributes for structured testing units includes a set of key : value pair wise attribute and the first set of testing attributes for unstructured testing units includes a set of testing textual attributes (504);

pre-processing the extracted first set of testing attributes, wherein the pre-processing techniques for structured testing units include removal of a key : value pair that is null and punctuation removal (506);

converting the pre-processed first set of testing attributes to a pre-defined standard format to obtain the second set of testing attributes, wherein the categorical first set of testing attributes and the textual first set of testing attributes are converted to numerical features (508);

extracting a set of relevant testing features from the second set of testing attributes based on Singular value decomposition ( SVD) with Term Frequency-Inverse Document Frequency (TF-IDF) techniques, wherein the set of relevant testing features comprise of a plurality of individual testing feature sets and a plurality of combined testing feature sets (510); and

determining a specific actionable determination from the specific actionable determination model based on a comparison of the set of relevant tracking features and set of relevant testing features, wherein the individual tracking feature sets and the combined tracking feature sets are compared with the individual testing feature sets and the combined testing feature sets based on cosine similarity techniques (512).

3. The method according to claim 1 and claim 2, wherein the specific actionable determination is a top-n resolution that is recommended based on a pre-defined value of n.

4. The method according to claim 1, further comprising the step of continually learning in the specific actionable determination model as follows:

receiving a feedback from a feedback system regarding the specific actionable determination, wherein the feedback is received for relevance of top-n resolution that is recommended(302);

computing a dynamic confidence score for the feedback and the top-n resolutions , wherein the dynamic confidence score is computed based on comparison between a SVD of top-n resolutions recommended and a SVD of the feedback (304); and

sorting the top-n resolutions and the feedback based on the dynamic confidence score to re-prioritize the top-n resolutions(306).

5. The method according to claim 1, wherein the for the structured tracker units and the structured testing units comprise of a plurality of note:note value attribute that represent a event or a issue and a corresponding remark : remark value attribute that represents the resolution for the event or the issue.

6. The method according to claim 1, wherein the pre-processing techniques include tokenization, lower case of words, stop words removal and lemmatization.

7. The method according to claim 1, wherein the SVD-TF-IDF techniques extract the set of relevant testing features or the set of relevant tracking features based on dynamically determined parameters that include a normalized Term Frequency (TF) and an Inverse Document Frequency (IDF).

8. The method according to claim 1, the plurality of the individual tracking features includes the relevant features of the second set of categorical tracking attributes and the second set of numerical tracking attributes and further the plurality of individual testing features includes the relevant features of the second sets of categorical testing attributes and the second set of numerical testing attributes.

9. The method according to claim 1, plurality of combined tracking feature sets includes the relevant features of second set of textual tracking attributes that are concatenated to form the combined tracking feature sets and further the plurality of combined testing feature sets includes the relevant features of second set of textual testing attributes that are concatenated to form the combined testing feature sets.

10. The method according to claim 1, wherein the supervised techniques include K-nearest neighbors, random forest and neural network, unsupervised techniques include clustering techniques and the hybrid techniques include K-nearest neighbors with K-means.

11. A system (100) comprising:

a unit for specific actionable determination (102) for specific actionable determination in an application;
a memory (104) for storing instructions;
one or more communication interfaces(106);
one or more hardware processors(108) communicatively coupled to the memory using the one or more communication interfaces, wherein the one or more hardware processors are configured by the instructions to execute the one or more modules of the a unit for specific actionable determination (102) for a specific actionable determination in an application, the system comprising:

an input module(202) that further comprises of a tracking unit input module (204) configured for receiving a plurality of tracker units as inputs from an application and a testing unit input module (206) configured for receiving a plurality of testing units as inputs from an application;
a basic extractor (208) that further comprises of a tracking unit basic extractor (210) configured for extracting a first set of attributes from the plurality of tracker units and a testing unit basic extractor (212) configured for extracting a first set of testing attributes from the plurality of testing units;
a pre-processor (214) that further comprises of a tracking pre-processor (216) configured for pre-processing the extracted first set of tracking attributes and a testing pre-processor (218) configured for pre-processing the extracted first set of testing attributes;
a second extractor (220) that further comprises of a tracking second extractor (222) configured for converting the pre-processed first set of tracking attributes to a pre-defined standard format to obtain the second set of tracking attributes and a testing second extractor (224) configured for converting the pre-processed first set of testing attributes to a pre-defined standard format to obtain the second set of testing attributes;
a relevant feature extractor (226) that further comprises of a tracking relevant feature extractor (228) configured for extracting a set of relevant tracking features from the second set of tracking attributes and a testing relevant feature extractor (230) configured for extracting a set of relevant testing features from the second set of testing attributes;
a specific actionable determination model (232) for determining a specific actionable determination using the set of relevant tracking features based on supervised or unsupervised techniques or hybrid techniques, wherein the specific actionable determination model is a dynamic model that is enabled with a continually learning features using a continual learning module (234) based on a feedback loop using a dynamic confidence score; and
a specific actionable determination module (236) configured for a determining a specific actionable determination from the specific actionable determination model (232) based on a comparison of the set of relevant tracking features and set of relevant testing features.

**12.** The system according to claim 11, further comprises a display module(238) wherein the specific actionable determination is displayed.

**13.** The system according to claim 11, wherein the continual learning module (234) is configured to implement the step of continually learning as follows:

receiving a feedback from a feedback system regarding the specific actionable determination, wherein the feedback is received for relevance of top-n resolution that is recommended;
computing a dynamic confidence score for the feedback and the top-n resolutions , wherein the dynamic confidence score is computed based on comparison between an SVD of top-n resolutions recommended and an SVD of the feedback; and
sorting the top-n resolutions and the feedback based on the dynamic confidence score to re-prioritize the top-n resolutions.

**14.** A non-transitory computer-readable medium having embodied thereon a computer readable program for a specific actionable determination in an application wherein the computer readable program , when executed by one or more hardware processors, causes:

receiving a plurality of tracker units as inputs from an application, wherein the plurality of tracker units are structured or unstructured, labelled or unlabeled and comprises of several sets of attributes that include a set of categorical attributes and a set of textual attributes and a set of numerical attributes;
extracting a first set of tracking unit attributes from the plurality of tracker units based on an extraction technique, wherein the first set of tracking unit attributes for structured tracker units includes a set of key:value pair wise attributes and the first set of attributes for unstructured tracker units includes a set of textual attributes;
pre-processing the extracted first set of tracking attributes, wherein the pre-processing techniques for structured tracker units further include removal of a key : value pair that is null and punctuation removal;
converting the pre-processed first set of tracking attributes to a pre-defined standard format to obtain the second set of tracking attributes, wherein the categorical first set of tracking attributes and the textual first set of tracking attributes are converted to a numerical features format;
extracting a set of relevant tracking features from the second set of tracking attributes based on Singular value decomposition (SVD ) with Term Frequency-Inverse Document Frequency (TF-IDF) techniques, wherein the set of relevant features comprise of a plurality of individual tracking feature sets and a plurality of combined tracking feature sets ; and
constructing a specific actionable determination model for determining a specific actionable determination using the set of relevant tracking features based on supervised or unsupervised techniques or hybrid techniques, wherein supervised techniques are implemented for labelled tracker units, unsupervised techniques are implemented for unlabeled tracker units and hybrid techniques are implemented based on a pre-defined threshold, wherein the specific actionable determination model is a dynamic model that is continually learns based on a feedback loop using a dynamic confidence score.

UNIT FOR SPECIFIC ACTIONABLE DETERMINATION 102

MEMORY 104

SYSTEM BUS 110

COMMUNICATION INTERFACE 106

PROCESSOR 108

100

FIG. 1

UNIT FOR SPECIFIC ACTIONABLE DETERMINATION

INPUT MODULE
202

TRACKING UNIT
INPUT MODULE
204

TESTING UNIT
INPUT MODULE
206

BASIC EXTRACTOR
208

TRACKING UNIT
BASIC EXTRACTOR
210

TESTING UNIT
BASIC EXTRACTOR
212

PRE_PROCESSOR
214

TRACKING UNIT
PRE_PROCESSOR
216

TESTING UNIT
PRE_PROCESSOR
218

SECOND EXTRACTOR
220

TRACKING UNIT
SECOND EXTRACTOR
222

TESTING UNIT
SECOND EXTRACTOR
224

SPECIFIC ACTIONABLE
DETERMINATION MODULE
236

RELEVANT FEATURE EXTRACTOR
226

TESTING UNIT RELEVANT
FEATURE EXTRACTOR
230

DISPLAY MODULE
238

SPECIFIC ACTIONABLE
DETERMINATION MODEL
232

CONTINUAL
LEARNING MODULE
234

TRACKING UNIT RELEVANT
FEATURE EXTRACTOR
228

FIG. 2

| Incident ID: | INC100000000001 |
|---|---|
| Incident Type: | Infrastructure Request |
| Summary: | [App1-BatchjobOMCMONITOR]: |
| | 2018-03-02T06:31:00.689+01:00 |
| | Hostname4 BATCH ERROR‖null‖PAYMENT |
| Service: | Service1 |
| Company: | Customer1 |
| Status Reason: | Monitoring Incident |
| Assigned Group: | OP-ZV-App1 |
| Assignee: | Vignesh |
| Reported Date: | 2/3/2018 6:33:14 AM |
| Reported: | BMC Impact Manager Event |
| Environment: | Production |
| Customer: | bppm_int,bmc |
| Urgency: | 3-Medium |
| Impact: | Moderate/Limited |
| Priority: | Medium |
| **Notes:** | xxxxxxxxxxxxxxxxxxxx |
| **Remark:** | JURA batch was suspended monitoring issue, JURA files are taking some |

**FIG.3A**

| Incident Type: | AUTOMATIC |
|---|---|
| Alarm ID: | jobOMCMONITOR |
| Help URL: | 1-ars1-a/_C1%3ARKM%3AKnowledgeArticle/ |
| | Default+Administrator+View |
| | /?F720000000=%22App1-Batchjob |
| | OMCMONITOR%22 |
| Severity: | CRITICAL |
| Host: | Hostname4.xnet.xx: |
| Alias: | Hostname4 |
| Date: | 20180302063313.000000+060 |
| Event Class: | SPLUNK |
| Object Class: | App1 |
| Object: | App1 Batch |
| Parameter: | App1-Batch-0 |
| Parameter Value: | |
| Message: | 2018-03-02T06:31:00.689+01:00 Hostname4 BATCH ERROR ‖null‖PAYMENT LOT HAVING LOT_ID :278375, FROM ISY IS NOT PROCESSED("NACK Received"). ‖execMethodGenericMonitor|914‖ com.s1.service1.OMINTR.OMCMONITOR. ProcessorOmcMonitor.execMethodGeneric Monitor(ProcessorOmcMonitor.java:914) |

**FIG3B**

receiving a feedback from a feedback system regarding the specific actionable determination, wherein the feedback is received for relevance of top-n resolution that is recommended →402

computing a dynamic confidence score for the feedback and the top-n resolutions , wherein the dynamic confidence score is computed based on comparison between an SVD of top-n resolutions recommended and an SVD of the feedback →404

sorting the top-n resolutions and the feedback based on the dynamic confidence score to re-prioritize the top-n resolutions →406

400

FIG. 4

receiving a plurality of testing units as inputs from an application, wherein the plurality of testing units is in pair wise format and comprises of several sets of testing attributes that include a set of categorical attributes and a set of textual attributes and a set of numerical attributes → 502

extracting a first set of testing attributes from the plurality of testing units based on an extraction technique, wherein the first set of testing attributes for structured testing units includes a set of key : value pair wise attribute and the first set of testing attributes for unstructured testing units includes a set of testing textual attributes → 504

pre-processing the extracted first set of testing attributes, wherein the pre-processing techniques for structured testing units include removal of a key : value pair that is null and punctuation removal. → 506

A

500

**FIG.5A**

A

converting the pre-processed first set of testing attributes to a pre-defined standard format to obtain the second set of testing attributes, wherein the categorical first set of testing attributes and the textual first set of testing attributes are converted to numerical features

→ 508

extracting a set of relevant testing features from the second set of testing attributes based on Singular value decomposition( SVD ) with Term Frequency-Inverse Document Frequency (TF-IDF) techniques, wherein the set of relevant testing features comprise of a plurality of individual testing feature sets and a plurality of combined testing feature sets

→ 510

determining a specific actionable determination from the specific actionable determination model based on a comparison of the set of relevant tracking features and set of relevant testing features, wherein the individual tracking feature sets and the combined tracking feature sets are compared with the individual testing feature sets and the combined testing feature sets based on cosine similarity techniques

→ 512

**FIG. 5B**

500

EP 3 889 849 A1

receiving a plurality of tracker units as inputs from an application, wherein the plurality of tracker units are structured or unstructured, labelled or unlabeled and comprises of several sets of attributes that include a set of categorical attributes and a set of textual attributes and a set of numerical attributes — 602

extracting a first set of tracking unit attributes from the plurality of tracker units based on an extraction technique, wherein the first set of tracking unit attributes for structured tracker units includes a set of key:value pair wise attributes and the first set of attributes for unstructured tracker units includes a set of textual attributes — 604

pre-processing the extracted first set of tracking attributes, wherein the pre-processing techniques for structured tracker units further include removal of a key : value pair that is null and punctuation removal. — 606

( A )

600

**FIG.6A**

```
                              ( A )
                               │
                               ▼
┌────────────────────────────────────────────────────────────────────────┐
│  converting the pre-processed first set of tracking attributes to a      │
│  pre-defined standard format to obtain the second set of tracking        │      608
│  attributes, wherein the categorical first set of tracking attributes    │
│  and the textual first set of tracking attributes are converted to a     │
│  numerical features format                                               │
└────────────────────────────────────────────────────────────────────────┘
                               │
                               ▼
┌────────────────────────────────────────────────────────────────────────┐
│  extracting a set of relevant tracking features from the second set of   │
│  tracking attributes based on Singular value decomposition( SVD ) with   │      610
│  Term Frequency-Inverse Document Frequency (TF-IDF) techniques,          │
│  wherein the set of relevant features comprise of a plurality of         │
│  individual tracking feature sets and a plurality of combined tracking   │
│  feature sets                                                            │
└────────────────────────────────────────────────────────────────────────┘
                               │
                               ▼
┌────────────────────────────────────────────────────────────────────────┐
│  constructing a specific actionable determination model for              │
│  determining a specific actionable resolution using the set of relevant  │
│  tracking features based on supervised or unsupervised techniques or     │      612
│  hybrid techniques, wherein supervised techniques are implemented for    │
│  labelled tracker units, unsupervised techniques are implemented for     │
│  unlabeled tracker units and hybrid techniques are implemented based     │
│  on a pre-defined threshold, wherein the specific actionable             │
│  determination model is a dynamic model that is continually learns       │
│  based on a feedback loop using a dynamic confidence score               │
└────────────────────────────────────────────────────────────────────────┘
```

600

**FIG. 6B**

Europäisches Patentamt

European Patent Office

Office européen des brevets

## EUROPEAN SEARCH REPORT

Application Number

EP 21 15 6391

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/035765 A1 (DATHENA SCIENCE PTE LTD [SG]) 21 February 2019 (2019-02-21) * abstract * * paragraph [0008] - paragraph [0012] * * paragraph [0028] - paragraph [0038] * * paragraph [0043] - paragraph [0077] * * paragraph [0084] - paragraph [0095] * * paragraph [0106] - paragraph [0135]; claim 3; figures 1B, 2,4 * | 1-14 | INV. G06N20/00 G06F17/16 G06F40/216 |
| A | ZOLAKTAF ZAINAB ET AL: "A Generic Top-N Recommendation Framework for Trading-Off Accuracy, Novelty, and Coverage", 2018 IEEE 34TH INTERNATIONAL CONFERENCE ON DATA ENGINEERING (ICDE), IEEE, 16 April 2018 (2018-04-16), pages 149-160, XP033426766, DOI: 10.1109/ICDE.2018.00023 [retrieved on 2018-10-24] * the whole document * | 1-14 | |
| A | WO 2019/123111 A1 (IBM [US]; IBM UK [GB]; IBM CHINA INVESTMENT CO LTD [CN]) 27 June 2019 (2019-06-27) * the whole document * | 1-14 | TECHNICAL FIELDS SEARCHED (IPC)<br><br>G06N<br>G06F |

The present search report has been drawn up for all claims

| Place of search | Date of completion of the search | Examiner |
|---|---|---|
| The Hague | 6 July 2021 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 15 6391

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2021

| Patent document cited in search report | | | Publication date | Patent family member(s) | | | Publication date |
|---|---|---|---|---|---|---|---|
| WO 2019035765 | A1 | | 21-02-2019 | SG | 11202101452R | A | 30-03-2021 |
| | | | | WO | 2019035765 | A1 | 21-02-2019 |
| WO 2019123111 | A1 | | 27-06-2019 | CN | 111344695 | A | 26-06-2020 |
| | | | | GB | 2583636 | A | 04-11-2020 |
| | | | | JP | 2021508391 | A | 04-03-2021 |
| | | | | US | 2019188276 | A1 | 20-06-2019 |
| | | | | WO | 2019123111 | A1 | 27-06-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202021014308